# EUROPEAN PATENT APPLICATION

(11) **EP 4 398 659 A1**
(43) Date of publication of application: **10.07.2024**
(21) Application number: 22863445.7
(22) Date of filing: 30.08.2022
(51) Int. Cl.: H04W 64/00

(54) **INFORMATION TRANSMISSION METHOD AND APPARATUS, AND DEVICE**

(30) Priority: 02.09.2021 CN 202111027496
(71) Applicant: Datang Mobile Communications Equipment Co., Ltd., Beijing 100085 (CN)
(72) Inventor: HOU, Yunjing, Beijing 100085 (CN); AI, Ming, Beijing 100085 (CN); JIANG, Yong, Beijing 100085 (CN); BAO, Chenxi, Beijing 100085 (CN)
(74) Representative: Studio Torta S.p.A.
(86) International application number: PCT/CN2022/115812
(87) International publication number: WO 2023/030310

(57) **Abstract**

The present disclosure provides an information transmission method, an information transmission apparatus, and a device, so as to solve the problem in the related art where there is a delay when obtaining a position of a UE. The method is applied to a positioning function entity with an interface for direct communication between the positioning function entity and an RAN device. The method includes: transmitting, by the positioning function entity, a first request message to the RAN device through the interface for direct communication, where the first request message is used to request position-related information; and, receiving, by the positioning function entity, a first response message in response to the first request message from the RAN device.

## Description

### CROSS-REFERENCE TO RELATED APPLICATION

This application claims a priority of the Chinese patent application No. 202111027496.8 filed on September 2, 2021, which is incorporated herein by reference in its entirety.

### TECHNICAL FIELD

The present disclosure relates to the field of communication technology, in particular to an information transmission method, an information transmission apparatus, and a device.

### BACKGROUND

In network architecture that supports a positioning service in the related art, all positioning messages need to be transmitted through an Access and Mobility Management Function (AMF) entity, so there is a delay when obtaining a position of a User Equipment (UE).

In an edge computing scenario, an Application Function (AF) entity or a Location Services (LCS) client is located close to a Radio Access Network (RAN) node, positioning signaling needs to be processed by a core network, and the position of the UE is transmitted from the core network to an application server close to an RAN. A core network device is located far away from the application server, so especially a long positioning delay occurs.

### SUMMARY

An object of the present disclosure is to provide an information transmission method, an information transmission apparatus, and a device, so as to solve the problem in the related art where there is a delay when obtaining a position of a UE.

In one aspect, the present disclosure provides in some embodiments an information transmission method for a positioning function entity, an interface for direct communication between the positioning function entity and an RAN device, the information transmission method including: transmitting, by the positioning function entity, a first request message to the RAN device through the interface for direct communication, the first request message being used to request position-related information; and receiving, by the positioning function entity, a first response message in response to the first request message from the RAN device.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the transmitting, by the positioning function entity, the first request message to the RAN device through the interface for direct communication includes: receiving a position request message from a mobility function entity, the position request message being used to request a position of a first UE and carrying UE-related information; and transmitting the first request message to the RAN device corresponding to the UE-related information through the interface for direct communication in accordance with the UE-related information, the first request message carrying a first identity of the UE.

In a possible embodiment of the present disclosure, the transmitting, by the positioning function entity, the first request message to the RAN device through the interface for direct communication includes: obtaining information of the RAN device for providing services for a UE and/or a first identity of the UE; and transmitting the first request message to the RAN device corresponding to the information of the RAN device through the interface for direct communication in accordance with the information of the RAN device, the first request message carrying the first identity of the UE.

In a possible embodiment of the present disclosure, the obtaining the information of the RAN device for providing services for the UE and/or the first identity of the UE includes: obtaining UE-related information from a first function entity; and obtaining the information of the RAN device for providing services for the UE and/or the first identity of the UE in accordance with the UE-related information.

In a possible embodiment of the present disclosure, the obtaining the UE-related information from the first function entity includes: receiving a position request message from an exposure function entity, the position request message being used to request a position of a UE; and obtaining the UE-related information corresponding to a second identity of the UE carried in the position request message from the first function entity in accordance with the second identity of the UE, the second identity being used to identify the UE, the UE being identified by a core network device in accordance with the second identity.

In a possible embodiment of the present disclosure, the UE-related information includes one or more of: information of the RAN device for providing services for the UE; the first identity of the UE; a connection state of the UE; information of a serving cell corresponding to the UE; or an access technology adopted by the UE.

In a possible embodiment of the present disclosure, the transmitting, by the positioning function entity, the first request message to the RAN device through the interface for direct communication includes: assigning, by the positioning function entity, an association identifier for the first request message, the association identifier being used to identify the first response message associated with the first request message in response messages from the RAN device; and transmitting, by the positioning function entity, the first request message to the RAN device through the interface for direct communication, the first request message carrying the association identifier.

In a possible embodiment of the present disclosure, subsequent to receiving, by the positioning function entity, the first response message in response to the first request message from the RAN device, the information transmission method further includes transmitting position information of a UE to a mobility function entity or an exposure function entity, and the position information of the UE is obtained by the positioning function entity in accordance with the first response message.

In another aspect, the present disclosure provides in some embodiments an information transmission method for an RAN device, an interface for direct communication between the RAN device and a positioning function entity, the information transmission method including: receiving, by the RAN device, a first request message from the positioning function entity through the interface for direct communication, the first request message being used to request position-related information; and transmitting, by the RAN device, a first response message in response to the first request message to the positioning function entity.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the information transmission method further includes obtaining, by the RAN device, an association identifier from the first request message, and storing a mapping relationship between the association identifier and an identity of the positioning function entity.

In a possible embodiment of the present disclosure, the transmitting, by the RAN device, the first response message in response to the first request message to the positioning function entity includes transmitting the first response message in response to the first request message to the positioning function entity in accordance with the mapping relationship between the association identifier and the identity of the positioning function entity.

In yet another aspect, the present disclosure provides in some embodiments a positioning function entity, an interface for direct communication between the positioning function entity and an RAN device, the positioning function entity including a memory, a transceiver and a processor. The memory is configured to store therein a computer program, and the transceiver is configured to receive and transmit data under the control of the processor. The transceiver is configured to: transmit a first request message to the RAN device through the interface for direct communication, the first request message being used to request position-related information; and receive a first response message in response to the first request message from the RAN device.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the transceiver is configured to: receive a position request message from a mobility function entity, the position request message being used to request a position of a UE and carrying UE-related information; and transmit the first request message to the RAN device corresponding to the UE-related information through the interface for direct communication in accordance with the UE-related information, the first request message carrying a first identity of the UE.

In a possible embodiment of the present disclosure, the transceiver is configured to: obtain information of the RAN device for providing services for a UE and/or a first identity of the UE; and transmit the first request message to the RAN device corresponding to the information of the RAN device through the interface for direct communication in accordance with the information of the RAN device, the first request message carrying the first identity of the UE.

In a possible embodiment of the present disclosure, the processor is further configured to: obtain UE-related information from a first function entity; and obtain the information of the RAN device for providing services for the UE and/or the first identity of the UE in accordance with the UE-related information.

In a possible embodiment of the present disclosure, the processor is further configured to: receive a position request message from an exposure function entity, the position request message being used to request a position of a UE; and obtain the UE-related information corresponding to a second identity of the UE carried in the position request message from the first function entity in accordance with the second identity of the UE, the second identity being used to identify the UE, the UE being identified by a core network device in accordance with the second identity.

In a possible embodiment of the present disclosure, the UE-related information includes one or more of: information of the RAN device for providing services for the UE; the first identity of the UE; a connection state of the UE; information of a serving cell corresponding to the UE; or an access technology adopted by the UE.

In a possible embodiment of the present disclosure, the processor is further configured to: assign an association identifier for the first request message, the association identifier being used to identify the first response message associated with the first request message in response messages from the RAN device; and transmit the first request message to the RAN device through the interface for direct communication, the first request message carrying the association identifier.

In still yet another aspect, the present disclosure provides in some embodiments an information transmission apparatus, including: a first transmission unit configured to transmit a first request message to an RAN device through an interface for direct communication between a positioning function entity and the RAN device, the first request message being used to request position-related information; and a first reception unit configured to receive a first response message in response to the first request message from the RAN device.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the first transmission unit is specifically configured to: receive a position request message from a mobility function entity, the position request message being used to request a position of a UE and carrying UE-related information; and transmit the first request message to the RAN device corresponding to the UE-related information through the interface for direct communication in accordance with the UE-related information, the first request message carrying a first identity of the UE.

In a possible embodiment of the present disclosure, the first transmission unit is specifically configured to: obtain obtaining information of the RAN device for providing services for a UE and/or a first identity of the UE; and transmit the first request message to the RAN device corresponding to the information of the RAN device through the interface for direct communication in accordance with the information of the RAN device, the first request message carrying the first identity of the UE.

In a possible embodiment of the present disclosure, the first transmission unit is specifically configured to: obtain UE-related information from a first function entity; and obtain the information of the RAN device for providing services for the UE and/or the first identity of the UE in accordance with the UE-related information.

In a possible embodiment of the present disclosure, the first transmission unit is specifically configured to: receive a position request message from an exposure function entity, the position request message being used to request a position of a UE; and obtain the UE-related information corresponding to a second identity of the UE carried in the position request message from the first function entity in accordance with the second identity of the UE, the second identity being used to identify the UE, the UE being identified by a core network device in accordance with the second identity.

In a possible embodiment of the present disclosure, the UE-related information includes one or more of: information of the RAN device for providing services for the UE; the first identity of the UE; a connection state of the UE; information of a serving cell corresponding to the UE; or an access technology adopted by the UE.

In a possible embodiment of the present disclosure, the first transmission unit is specifically configured to: assign an association identifier for the first request message, the association identifier being used to identify the first response message associated with the first request message in response messages from the RAN device; and transmit the first request message to the RAN device through the interface for direct communication, the first request message carrying the association identifier.

In a possible embodiment of the present disclosure, the information transmission apparatus further includes a third transmission unit configured to transmit position information of a UE to a mobility function entity or an exposure function entity, and the position information of the UE is obtained by the positioning function entity in accordance with the first response message.

In still yet another aspect, the present disclosure provides in some embodiments an RAN device, an interface for direct communication between the RAN device and a positioning function entity, the RAN device including a memory, a transceiver and a processor. The memory is configured to store therein a computer program, and the transceiver is configured to receive and transmit data under the control of the processor. The transceiver is configured to: receive a first request message from the positioning function entity through the interface for direct communication, the first request message being used to request position-related information; and transmit a first response message in response to the first request message to the positioning function entity.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the processor is further configured to obtain an association identifier from the first request message, and store a mapping relationship between the association identifier and an identity of the positioning function entity.

In a possible embodiment of the present disclosure, the transceiver is further configured to transmit the first response message in response to the first request message to the positioning function entity in accordance with the mapping relationship between the association identifier and the identity of the positioning function entity.

In still yet another aspect, the present disclosure provides in some embodiments an information transmission apparatus, including: a second reception unit configured to receive a first request message from a positioning function entity through an interface for direct communication between an RAN device and the positioning function entity; and a second transmission unit configured to transmit a first response message in response to the first request message to the positioning function entity.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the information transmission apparatus further includes a processing unit configured to obtain an association identifier from the first request message, and store a mapping relationship between the association identifier and an identity of the positioning function entity.

In a possible embodiment of the present disclosure, the second transmission unit is specifically configured to transmit the first response message in response to the first request message to the positioning function entity in accordance with the mapping relationship between the association identifier and the identity of the positioning function entity.

In still yet another aspect, the present disclosure provides in some embodiments a computer-readable storage medium storing therein a computer program. The computer program is executed by a processor so as to implement the above-mentioned information transmission method.

The present disclosure at least has the following technical effect.

According to the embodiments of the present disclosure, the interface for direct communication is between the positioning function entity and the RAN device, the positioning function entity transmits the first request message to the RAN device through the interface for direct communication, the first request message is used to request the position-related information, and the positioning function entity receives the first response message in response to the first request message from the RAN device. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

### BRIEF DESCRIPTION OF THE DRAWINGS

Fig. 1 is a flow chart of an information transmission method according to one embodiment of the present disclosure;
Fig. 2 is another flow chart of the information transmission method according to one embodiment of the present disclosure;
Fig. 3 is a schematic view showing network architecture according to one embodiment of the present disclosure;
Fig. 4 is yet another flow chart of the information transmission method according to one embodiment of the present disclosure;
Fig. 5 is still yet another flow chart of the information transmission method according to one embodiment of the present disclosure;
Fig. 6 is still yet another flow chart of the information transmission method according to one embodiment of the present disclosure;
Fig. 7 is still yet another flow chart of the information transmission method according to one embodiment of the present disclosure;
Fig. 8 is a schematic view showing a positioning function entity according to one embodiment of the present disclosure;
Fig. 9 is a block diagram of the positioning function entity according to one embodiment of the present disclosure;
Fig. 10 is a schematic view showing an RAN device according to one embodiment of the present disclosure; and
Fig. 11 is a block diagram of the RAN device according to one embodiment of the present disclosure.

### DETAILED DESCRIPTION

The expression "and/or" in the embodiments of the present disclosure may be merely used to describe the relationship between objects, and it may include three relationships. For example, "A and/or B" may represent that, there is only A, there are both A and B, and there is only B. Further, the symbol "/" usually refers to "or".

The expression "a plurality of" refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

An object of the present disclosure is to provide an information transmission method and an information transmission apparatus, so as to solve the problem in the related art where there is a delay when obtaining a position of a UE. The method and the device are provided on the basis of a same inventive concept, and a principle of the method for solving the problem is similar to that of the device, so the implementation of the device may refer to that of the method and will not be particularly defined.

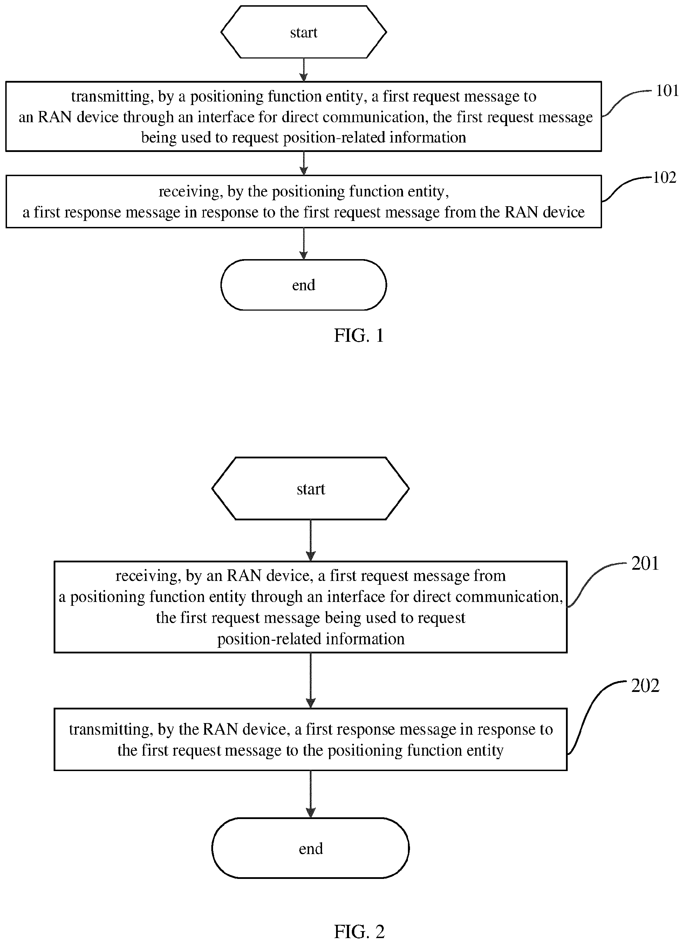

As shown in Fig. 1, the present disclosure provides in some embodiments an information transmission method for a positioning function entity. An interface for direct communication is between the positioning function entity and an RAN device.

It should be appreciated that, the positioning function entity involved in the embodiments of the present disclosure may be an Location Management Function (LMF) entity in a 5^{th}-Generation (5G) network, a Serving Mobile Location Center (SMLC) function entity in a 4^{th}-Generation (4G) network, or a positioning-related function entity in a 6^{th}-Generation (6G) network, which will not be particularly defined herein.

The information transmission method specifically includes the following steps.

Step 101: transmitting, by the positioning function entity, a first request message to the RAN device through the interface for direct communication, the first request message being used to request position-related information.

It should be appreciated that, through the interface for direct communication between the positioning function entity and the RAN device, it is able to transfer a positioning message between the positioning function entity and the RAN device without being forwarded by a mobility function entity, thereby to reduce a positioning delay.

In a possible embodiment of the present disclosure, the positioning function entity is deployed in a core network or deployed close to the RAN device.

It should be appreciated that, when the positioning function entity is deployed close to the RAN device, it means that the positioning function entity is a local positioning function entity sunken from the core network to a position close to the RAN device, and it is suitable for an edge computing scenario.

Here, in a possible embodiment of the present disclosure, the RAN device is a base station.

Taking an LMF entity in the 5G network as an example, the LMF entity transmits a request message for providing positioning information to the RAN device through an interface for direct communication between the LMF entity and the RAN device. To be specific, the LMF entity transmits a position providing request message (Nran_Location_ProvidePositioningInfo Request) to the RAN device. The request message for providing the position information may be understood as the first request message, and it is specifically used to request a position of a UE or request measurement information related to the position of the UE.

Step 102: receiving, by the positioning function entity, a first response message in response to the first request message from the RAN device.

Taking the LMF entity in the 5G network as an example, the LMF entity receives a response message for providing position information from the RAN device. To be specific, the LMF entity receives Nran_Location_ProvidePositioningInfo Response from the RAN device.

Here, the LMF entity obtains the position information of the UE in accordance with the response message for providing the position information.

According to the information transmission method in the embodiments of the present disclosure, the interface for direct communication is between the positioning function entity and the RAN device, the positioning function entity transmits the first request message to the RAN device through the interface for direct communication, the first request message is used to request the position-related information, and the positioning function entity receives the first response message in response to the first request message from the RAN device. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the positioning message is a first positioning message transmitted to the UE or a third positioning message transmitted to the RAN device.

It should be appreciated that, when the positioning message is the first positioning message transmitted to the UE, UE-assisted and UE-based positioning procedures are performed subsequently. When the positioning message is the third positioning message transmitted to the RAN device, a network-assisted positioning procedure is performed subsequently.

The message type is used to indicate a type of the positioning message, and the type of the positioning message includes one of a type 1, i.e., the first positioning message transmitted to the UE, and a type 2, i.e., the third positioning message transmitted to the RAN device.

It should be appreciated that, the RAN device determines a device for processing the positioning message in accordance with the message type of the positioning message in the first request message. To be specific, when the message type of the positioning message is the type 1, the RAN device transmits the positioning message (the first positioning message) to the UE, so that the UE processes the positioning message, i.e., performs the UE-assisted and UE-based positioning procedures in accordance with the positioning message.

When the message type of the positioning message is the type 2, the RAN device processes the positioning message (the third positioning message) by itself, i.e., the RAN device performs the network-assisted positioning procedure.

In a possible embodiment of the present disclosure, the first positioning message includes a downlink positioning message, or an LCS periodic-triggered invoke request message.

In a possible embodiment of the present disclosure, the third positioning message includes a network positioning message or a pre-agreed message.

In a possible embodiment of the present disclosure, Step 101 of transmitting, by the positioning function entity, the first request message to the RAN device through the interface for direct communication includes: receiving a position request message from a mobility function entity, the position request message being used to request a position of a UE and carrying UE-related information; and transmitting the first request message to the RAN device corresponding to the UE-related information through the interface for direct communication in accordance with the UE-related information, the first request message carrying a first identity of the UE.

It should be appreciated that, the mobility function entity involved in the embodiments of the present disclosure is an AMF entity in the 5G network, a Mobility Management Entity (MME) in the 4G network, or a function entity for managing UE mobility in the 6G network, which will not be particularly defined herein.

Taking the LMF entity in the 5G network as an example, the LMF entity receives a request message for determining a position from the AMF entity. To be specific, the LMF entity receives Nlmf_Location_DetermineLocation Request from the AMF entity.

Here, the LMF entity receives the position determination request message from the AMF entity, because the AMF entity selects the LMF entity as follows. Upon the receipt of a request message for providing position information from a Gateway Mobile Location Center (GMLC) or an uplink (UL) Non Access Stratum (NAS) transport Mobile Originating Location Request (MO-LR), the AMF entity performs LMF selection.

To be specific, the AMF entity searches information of the LMF entity in in a Network Repository Function (NRF) entity in accordance with such information as a Data Network Access Identifier (DNAI), Single Network Slice Selection Assistance Information (S-NSSAI), an application identifier, an LCS client identifier.

Here, the DNAI, the S-NSSAI, the application identifier, and the LSC client identifier are provided by the UE or a GMLC, or determined by the AMF entity in accordance with information provided by the GMLC or UE and local configuration information. For example, the AMF entity determines the S-NSSAI in accordance with a service type/client type provided by the UE, or in accordance with a service type/client type provided by the GMLC.

In another possible embodiment of the present disclosure, Step 101 of transmitting, by the positioning function entity, the first request message to the RAN device through the interface for direct communication includes: obtaining information of the RAN device for providing services for a UE and/or a first identity of the UE; and transmitting the first request message to the RAN device corresponding to the information of the RAN device through the interface for direct communication in accordance with the information of the RAN device, the first request message carrying the first identity of the UE. The information of the RAN device includes an identity uniquely identifying the RAN device, e.g., an Internet Protocol (IP) address of the RAN device, or an Identity Document (ID) of the RAN device.

Based on the above, in a possible embodiment of the present disclosure, the obtaining the information of the RAN device for providing services for the UE and/or the first identity of the UE includes: obtaining UE-related information from a first function entity; and obtaining the information of the RAN device for providing services for the UE and/or the first identity of the UE in accordance with the UE-related information.

It should be appreciated that, the first function entity includes, but not limited to, a core network control plane network element or a local network function entity.

Here, the core network control plane network element includes, but not limited to, an NRF entity or a mobility function entity.

The local network function entity refers to a network function entity deployed close to the RAN device.

Based on the above, in a possible embodiment of the present disclosure, the obtaining the UE-related information from the first function entity includes: transmitting a second request message to the first function entity, the second request message being used to request for obtaining the UE-related information ; and receiving the UE-related information from the first function entity.

The implementation of obtaining the UE-related information will be described hereinafter when the first function entity is any one of the above-mentioned function entities.

1) When the first function entity is the NRF entity, the obtaining the UE-related information includes: transmitting a request message A1 to the NRF entity; and receiving a response message B1 from the NRF entity. The response message B1 includes the UE-related information or failure indication information, and the failure indication information is used to indicate that the UE-related information is not stored in the NRF entity.

On one hand, in the case that the response message B1 includes the failure indication information, the UE-related information is obtained through the mobility function entity.

It should be appreciated that, the obtaining the UE-related information through the mobility function entity will be described in 2) and thus will not be particularly defined herein.

On the other hand, in the case that the response message B 1 includes the failure indication information, the NRF entity is triggered to transmit a request message C1 to the mobility function entity, and the UE-related information is received from the NRF entity after the NRF entity obtains a response message D1 from the mobility function entity. The response message D1 includes the UE-related information.

Here, after the mobility function entity has received the request message C1, the UE is triggered to be in a connected state, and the response message D1 is transmitted to the NRF entity. The response message D1 includes the UE-related information.

2) In the case that the first function entity is the mobility function entity, the obtaining the UE-related information includes: obtaining information of the mobility function entity from a Unified Data Management (UDM) entity; transmitting a request message A2 to the mobility function entity; and receiving a response message B2 from the mobility function entity, the response message B2 including the UE-related information.

It should be appreciated that, upon the receipt of the request message A2, when the mobility function entity finds that the UE is in the connected state, it directly returns the response message B2, and the response message includes the UE-related information.

When the mobility function entity finds that the UE is in an idle state, the UE is triggered to be in the connected state, and then the mobility function entity returns the response message B2. The response message B2 includes the UE-related information.

3) In the case that the first function entity is the local network function entity, the obtaining the UE-related information includes: transmitting a request message E1 to the local network function entity; and receiving a response message F1 from the local network function entity, the response message F1 including the UE-related information.

It should be appreciated that, the local network function entity is used to store the UE-related information.

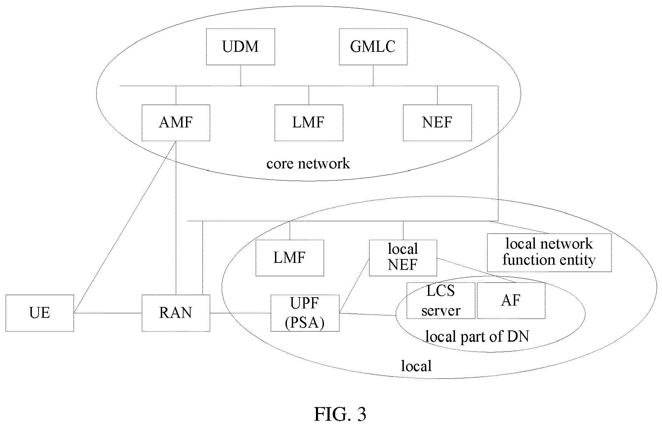

Here, in network architecture to which the method in the embodiments of the present disclosure is applied, as shown in Fig. 3, the local network function entity is locally deployed in an RAN, so as to store the UE-related information. In this way, the positioning function entity obtains the UE-related information locally in a more convenient manner, so as to help the positioning function entity to obtain the position of the UE without any necessity to obtain the position of the UE from a core network device, thereby to further reduce the delay for obtaining the position of the UE.

Here, how to obtain the UE-related information by the local network function entity will be described as follows. In a possible embodiment of the present disclosure, the mobility function entity decides to transmit a storage request message to the local network function entity in accordance with an indication from the UE, subscription of the UE, the position of the UE or a coverage range of an edge network, and the local network function entity transmits a storage acknowledgement message to the mobility function entity.

It should be appreciated that, the indication from the UE is an indicator carried in a registration request message, e.g., a UE type or an edge network access indication.

The position of the UE is an identity of a serving cell for the UE, or a position of an RAN device connected to the UE.

The coverage range of the edge network is a Tracking Area (TA)/cell list, or a range of a geographical region.

In another possible embodiment of the present disclosure, the obtaining the UE-related information from the first function entity includes receiving a position request message from an exposure function entity, and the position request message is used to request the position of the UE.

It should be appreciated that, the exposure function entity is a Network Exposure Function (NEF) entity in the 5G network, a Service Capability Exposure Function (SCEF) entity in the 4G network, or a function entity for providing network information to a third party in the 6G network.

It should be appreciated that, the exposure function entity is deployed in a core network or deployed closed to the RAN device.

Here, when the exposure function entity is deployed close to the RAN device, it means that the exposure function entity is a local exposure function entity sunken from the core network to a position close to the RAN device. In this way, the positioning procedure is triggered directly through the local exposure function entity, so it is able to further prevent a core network side device from participating in the obtaining of the position of the UE, thereby to further reduce the delay of obtaining the position of the UE.

Taking the LMF entity in the 5G network as an example, the LMF entity receives a position determination request message from the NEF entity. To be specific, the LMF entity receives Nlmf_Location_DetermineLocation Request from the NEF entity.

The UE-related information corresponding to a second identity of the UE carried in the position request message is obtained from the first function entity in accordance with the second identity of the UE. The second identity is used to identify the UE, and the core network device identifies the UE in accordance with the second identity.

It should be appreciated that, the second identity of the UE includes one or more of an International Mobile Subscriber Identity (IMSI), a Generic Public Subscription Identifier (GPSI), a Subscription Permanent Identifier (SUPI), a Globally Unique Temporary Identity (GUTI), a Temporary Mobile Subscriber Identity (TMSI), an identifier for uniquely identifying the UE in the 6G core network, or an identifier of the UE used in a network function entity in the 6G core network.

In a possible embodiment of the present disclosure, the UE-related information includes one or more of: information of the RAN device for providing services for the UE; the first identity of the UE; a connection state of the UE; information of a serving cell corresponding to the UE; or an access technology adopted by the UE.

In a possible embodiment of the present disclosure, Step 101 of transmitting, by the positioning function entity, the first request message to the RAN device through the interface for direct communication includes: assigning, by the positioning function entity, an association identifier for the first request message, the association identifier being used to identify the first response message associated with the first request message in response messages from the RAN device; and transmitting, by the positioning function entity, the first request message to the RAN device through the Interface for direct communication, the first request message carrying the association identifier.

It should be appreciated that, the positioning function entity transmits a plurality of request messages simultaneously to the RAN device, and the plurality of request messages is provided with respect to one UE or a plurality of UEs. When a plurality of response messages is returned by the RAN device, the positioning function entity needs to determine a request message corresponding to each response message in accordance with the association identifier, i.e., find the first response message associated with the first request message in accordance with the association identifier.

In a possible embodiment of the present disclosure, subsequent to receiving, by the positioning function entity, the first response message in response to the first request message from the RAN device, the information transmission method further includes transmitting position information of a UE to a mobility function entity or an exposure function entity, and the position information of the UE is obtained by the positioning function entity in accordance with the first response message.

To be specific, the position information of the UE is transmitted to the mobility function entity or exposure function entity through a position response message in response to a position request message, and the position response message includes the position information of the UE.

It should be appreciated that, the method in the embodiments of the present disclosure is suitable for an edge computing scenario. In this scenario, the positioning function entity is a local positioning function (e.g., L-LMF) entity sunken from the core network to a position close to the RAN device, and the exposure function entity is a local exposure function (e.g., L-NEF) entity sunken from the core network to a position close to the RAN device. Fig. 3 shows specific network architecture.

According to the information transmission method in the embodiments of the present disclosure, the interface for direct communication is between the positioning function entity and the RAN device, the positioning function entity transmits the first request message to the RAN device through the interface for direct communication, the first request message is used to request the position-related information, and the positioning function entity receives the first response message in response to the first request message from the RAN device. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

As shown in Fig. 2, the present disclosure further provides in some embodiments an information transmission method for an RAN device. An interface for direct communication is between the RAN device and a positioning function entity. The information transmission method includes the following steps.

Step 201: receiving, by the RAN device, a first request message from the positioning function entity through the interface for direct communication, the first request message being used to request position-related information.

In a possible embodiment of the present disclosure, the positioning function entity is deployed in a core network or deployed close to the RAN device.

In a possible embodiment of the present disclosure, the RAN device is a base station. This step corresponds to the above-mentioned Step 101, and thus will not be particularly defined herein.

Step 202: transmitting, by the RAN device, a first response message in response to the first request message to the positioning function entity.

In this step, the RAN device transmits the first response message in response to the first request message to the positioning function entity, so that the positioning function entity obtains position information of a UE in accordance with the first response message.

According to the information transmission method in the embodiments of the present disclosure, the interface for direct communication is between the positioning function entity and the RAN device, the RAN device receives the first request message from the positioning function entity through the interface for direct communication, the first request message is used to request the position-related information, and the RAN device transmits the first response message in response to the first request message to the positioning function entity. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the positioning message is a first positioning message transmitted to the UE or a third positioning message transmitted to the RAN device.

It should be appreciated that, when the positioning message is the first positioning message transmitted to the UE, UE-assisted and UE-based positioning procedures are performed subsequently. When the positioning message is the third positioning message transmitted to the RAN device, a network-assisted positioning procedure is performed subsequently.

The message type is used to indicate a type of the positioning message, and the type of the positioning message includes one of a type 1, i.e., the first positioning message transmitted to the UE, and a type 2, i.e., the third positioning message transmitted to the RAN device.

It should be appreciated that, the RAN device determines a device for processing the positioning message in accordance with the message type of the positioning message in the first request message. To be specific, when the message type of the positioning message is the type 1, the RAN device transmits the positioning message (the first positioning message) to the UE, so that the UE processes the positioning message, i.e., performs the UE-assisted and UE-based positioning procedures in accordance with the positioning message.

When the message type of the positioning message is the type 2, the RAN device processes the positioning message (the third positioning message) by itself, i.e., the RAN device performs the network-assisted positioning procedure.

In a possible embodiment of the present disclosure, the first positioning message includes a downlink positioning message, or an LCS periodic-triggered invoke request message.

In a possible embodiment of the present disclosure, the third positioning message includes a network positioning message or a pre-agreed message.

In a possible embodiment of the present disclosure, prior to transmitting, by the RAN device, the first response message in response to the first request message to the positioning function entity, the information transmission method further includes: in the case that the first request message includes the first positioning message and the first positioning message is the downlink positioning message, transmitting, by the RAN device, a first Radio Resource Control (RRC) message to the UE so as to trigger the UE to perform positioning measurement and/or position calculation, the first RRC message including the downlink positioning message; and receiving, by the RAN device, a second RRC message from the UE, the second RRC message including an uplink positioning message.

It should be appreciated that, upon the receipt of the downlink positioning message from the RAN device, the UE performs the positioning measurement and/or position calculation, so as to obtain a processing result.

To be specific, when the UE performs the positioning measurement, the obtained processing result is measurement information, and when the UE performs the positioning measurement and the position calculation, the obtained processing result is the position information of the UE.

It should be appreciated that, the uplink positioning message includes the processing result obtained after the UE performs the positioning measurement and/or position calculation.

Then, the uplink positioning message is carried in the first response message, and transmitted by the RAN device to the positioning function entity. In other words, the first response message includes the uplink positioning message.

In another possible embodiment of the present disclosure, prior to transmitting, by the RAN device, the first response message in response to the first request message to the positioning function entity, the information transmission method further includes: in the case that the first request message includes the first positioning message and the first positioning message is the LCS periodic-triggered invoke request message, transmitting, by the RAN device, a third RRC message to the UE, the third RRC message including the LCS periodic-triggered invoke request message; and receiving, by the RAN device, a fourth RRC message from the UE, the fourth RRC message including an LCS periodic-triggered invoke return result, and the LCS periodic-triggered invoke return result being used to indicate that the UE has received the LCS periodic-triggered invoke request message.

It should be appreciated that, when the first positioning message is the LCS periodic-triggered invoke request message, it means that a positioning request from the AF entity includes a period parameter, i.e., the positioning request is triggered periodically.

To be specific, the LCS periodic-triggered invoke request message includes a deferred router identifier.

Then, the LCS periodic-triggered invoke return result is carried in the first response message, and transmitted by the RAN device to the positioning function entity, i.e., the first response message includes the LCS periodic-triggered invoke return result.

It should be appreciated that, before the execution of the method in the embodiments of the present disclosure, the positioning function entity has already triggered a UE positioning procedure, i.e., the positioning function entity has already known the position information of the UE.

Here, after the RAN device has received the fourth RRC message from the UE, the positioning function entity transmits the position information of the UE to the mobility function entity, the exposure function entity or the local network function entity (to be specific, the positioning function entity transmits the position information of the UE through the position response message corresponding to the position request message). Next, when the UE monitors an event or needs to report its position, the UE performs the position measurement. Then, the RAN device receives a fifth RRC message from the UE, and the fifth RRC message includes an event report and a deferred router identifier. The RAN device selects the positioning function entity in accordance with the deferred router identifier, and transmits the event report to the positioning function entity.

In another possible embodiment of the present disclosure, prior to transmitting, by the RAN device, the first response message in response to the first request message to the positioning function entity, the information transmission method further includes: in the case that the first request message includes the third positioning message and the third positioning message is the network positioning message, obtaining, by the RAN device, measurement information; and transmitting the measurement information carried in the network positioning message to the positioning function entity through the first response message.

Here, a procedure of obtaining, by the RAN device, the measurement information is just the network-assisted positioning procedure.

In other words, the first response message includes the network positioning message, and the measurement positioning message carries the measurement information.

It should be appreciated that, the RAN device receives a plurality of downlink positioning messages for a same UE from the LMF entity. When a plurality of uplink positioning messages is returned by the UE, the RAN device needs to determine the downlink positioning message corresponding to each uplink positioning message. In the case that the first request message includes the association identifier, in a possible embodiment of the present disclosure, the information transmission method further includes obtaining, by the RAN device, the association identifier from the first request message, and storing a mapping relationship between the association identifier and an identifier of the positioning function entity.

Here, in the case that the first request message does not include the association identifier, in another possible embodiment of the present disclosure, the information transmission method further includes assigning, by the RAN device, an association identifier for the first request message, and storing a mapping relationship between the association identifier and the identifier of the positioning function entity. The association identifier is used to identify the first response message associated with the first request message in response messages from the RAN device.

Further, Step 202 of transmitting, by the RAN device, the first response message in response to the first request message to the positioning function entity includes transmitting the first response message in response to the first request message to the positioning function entity in accordance with the mapping relationship between the association identifier and the identifier of the positioning function entity.

To be specific, prior to the above step, the information transmission method further includes: in the case that the first request message includes the first positioning message, transmitting a first positioning message and an association identifier to the UE; and receiving a second positioning message and the association identifier from the UE, the first response message including the second positioning message.

It should be appreciated that, in the case that the first positioning message is a downlink positioning message, the second positioning message is an uplink positioning message, and the uplink positioning message includes a processing result obtained after the UE performs positioning measurement and/or position calculation.

Here, the RAN device finds the positioning function entity which transmits the positioning request in accordance with the association identifier and the mapping relationship between the association identifier and an identifier of the LMF entity, and transmits the first response message to the corresponding positioning function entity.

It should be appreciated that, the method in the embodiments of the present disclosure is suitable for an edge computing scenario. In this scenario, the positioning function entity is a local positioning function (e.g., L-LMF) entity sunken from the core network to a position close to the RAN device, and the exposure function entity is a local exposure function (e.g., L-NEF) entity sunken from the core network to a position close to the RAN device. Fig. 3 shows specific network architecture.

According to the information transmission method in the embodiments of the present disclosure, the interface for direct communication is between the positioning function entity and the RAN device, the RAN device receives the first request message from the positioning function entity through the interface for direct communication, the first request message is used to request the position-related information, and the RAN device transmits the first response message in response to the first request message to the positioning function entity. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

By taking the 5G network scenario as an example, the implementation of the information transmission method in the embodiments of the present disclosure will be described hereinafter on the basis of interaction between devices in conjunction with, but not limited to, the following embodiments.

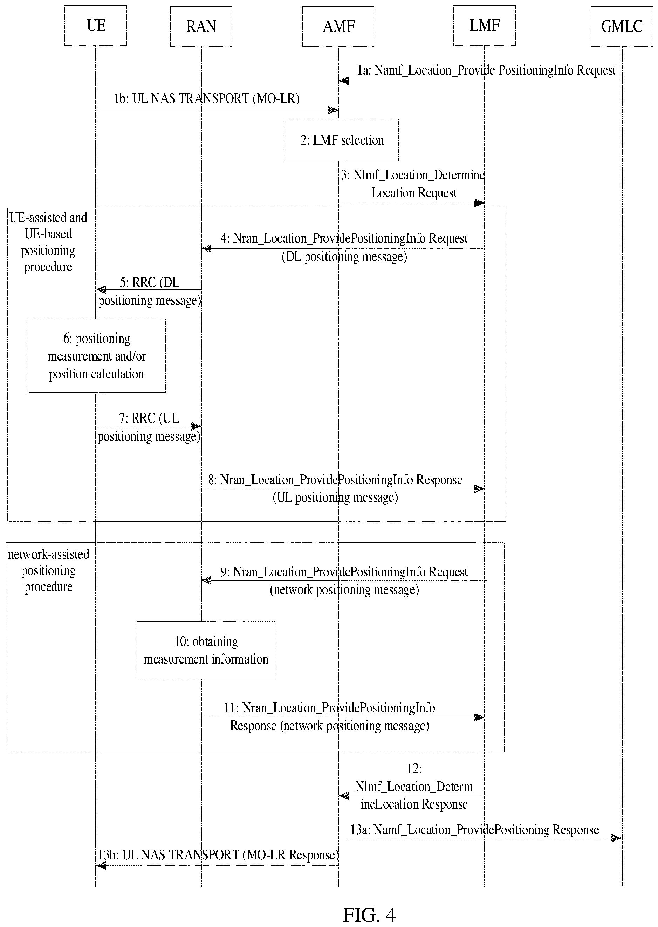

First Embodiment: a one-time positioning procedure as shown in Fig. 4.

Step 1a: the GMLC transmits an Namf_Location_ProvidePositioningInfo Request message to the AMF entity; or Step 1b: the UE transmits UL NAS TRANSPORT (an uplink non-access stratum transport message) carrying a Mobile Originated Location Request (MO-LR) to the AMF entity.

Step 2: the AMF entity selects an LMF entity.

It should be appreciated that, the AMF entity selects the LMF entity after Step 1a) or 1b).

To be specific, the AMF entity searches information of the LMF entity in an NRF entity in accordance with such information as DNAI, S-NSSAI), application identifier or LCS client identifier.

Here, the DNAI, the S-NSSAI, the application identifier, and the LSC client identifier are provided by the UE or the GMLC, or determined by the AMF entity in accordance with information provided by the GMLC or UE and local configuration information. For example, the AMF entity determines the S-NSSAI in accordance with a service type/client type provided by the UE, or in accordance with a service type/client type provided by the GMLC.

Step 3: the AMF entity transmits an Nlmf_Location_DetermineLocation Request message to the LMF entity.

In this step, the Nlmf_Location_DetermineLocation Request message includes information of an RAN node for providing services for the UE and/or an ID of the UE. In a possible embodiment of the present disclosure, the information of the RAN node is an ID or an IP address of the RAN node.

After this step, in a possible embodiment of the present disclosure, the LMF entity assigns an association identifier for the Nran_Location_ProvidePositioningInfo Request message to be transmitted to the RAN node, and the association identifier is used to identify an Nran_Location_ProvidePositioningInfo response message associated with the Nran_Location_ProvidePositioningInfo Request message in response messages from the RAN node.

The LMF entity obtains the position of the UE through the UE-assisted and UE-based positioning procedure, or obtains the position of the UE through the network-assisted positioning procedure.

The two procedures will be described hereinafter. The UE-assisted and UE-based positioning procedure includes the following Steps 4-8.

Step 4: the LMF entity transmits the Nran_Location_ProvidePositioningInfo Request message to the RAN node. The Nran_Location_ProvidePositioningInfo Request message includes a downlink positioning message.

When the association identifier has been assigned by the LMF entity before this step, the Nran_Location_ProvidePositioningInfo Request message further includes the association identifier, and the RAN node locally stores the mapping relationship between the identifier of the LMF entity and the association identifier.

When the association identifier fails to be assigned by the LMF entity before this step, in a possible embodiment of the present disclosure, the RAN node assigns the association identifier, and locally stores the mapping relationship between the identifier of the LMF entity and the association identifier.

To be specific, the RAN node stores <association identifier, LMF> in a locally-stored UE context.

Step 5: the RAN node transmits an RRC message to the UE, and the RRC message includes the downlink positioning message and the association identifier.

Step 6: the UE performs positioning measurement and/or position calculation.

Step 7: the UE transmits an RRC message to the RAN node, and the RRC message includes the uplink positioning message and the association identifier.

It should be appreciated that, when the UE performs the positioning measurement, the uplink positioning message includes measurement information obtained by the UE, and when the UE performs the position calculation, the uplink positioning message includes position information of the UE.

Here, the RAN node finds the LMF entity corresponding to the uplink positioning message in accordance with the locally-stored mapping relationship between the identifier of the LMF entity and the association identifier.

Step 8: the RAN node transmits an Nran_Location_ProvidePositioningInfo Response to the LMF entity, and the Nran_Location_ProvidePositioningInfo Response message includes the uplink positioning message.

Here, the LMF entity obtains the position information of the UE in accordance with the Nran_Location_ProvidePositioningInfo Response message.

To be specific, when the uplink positioning message in the Nran_Location_ProvidePositioningInfo Response message carries the position information of the UE, the LMF entity directly obtains the position information of the UE, and when the uplink positioning message in the Nran_Location_ProvidePositioningInfo Response message carries the measurement information obtained by the UE, the LMF entity performs position calculation in accordance with the measurement information, so as to obtain the position information of the UE.

The network-assisted positioning procedure includes the following Steps 9 to 11.

Step 9: the LMF entity transmits an Nran_Location_ProvidePositioningInfo Request message to the RAN node, and this message includes a network positioning message.

Step 10: the RAN node obtains the measurement information.

Step 11: the RAN node transmits an Nran_Location_ProvidePositioningInfo Response message to the LMF entity, and this message includes the network positioning message.

In this step, the LMF entity obtains the position information of the UE in accordance with the network positioning message in the Nran_Location_ProvidePositioningInfo Response message.

Based on the above, the LMF entity obtains the position information of the UE through Steps 4 to 8, i.e., the UE-assisted and UE-based positioning procedure, or obtains the position information of the UE through Steps 9 to 11, i.e., the network-assisted positioning procedure.

Step 12: the LMF entity transmits the Nlmf_Location_DetermineLocation Response message to the AMF entity, and the Nlmf_Location_DetermineLocation Response message includes the position information of the UE.

Step 13a: the AMF entity transmits the Namf_Location_ProvidePositioning Response message to the GMLC. It should be appreciated that, Step 13a corresponds to Step 1a.

Step 13b: the AMF entity transmits a DL NAS TRANSPORT message carrying an MO-LR Response to the UE. It should be appreciated that, Step 13b corresponds to Step 1b.

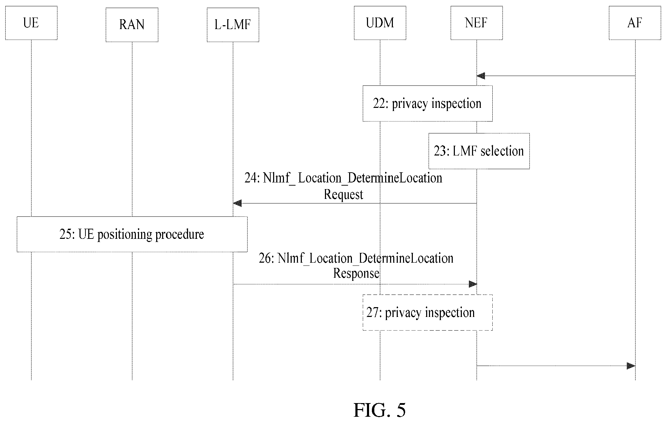

Second Embodiment: a one-time positioning procedure as shown in Fig. 5.

Step 21: the AF entity transmits an Nnef_EventExposure_Subscribe message to the NEF entity. Here, after selecting the NEF entity, the AF entity transmits the Nnef_EventExposure_Subscribe message to the NEF entity.

Step 22: the NEF entity obtains privacy setting information of the UE through a UDM entity, and performs privacy inspection.

Step 23: the NEF entity selects the LMF entity.

To be specific, the NEF entity searches the information of the LMF entity in an NRF entity in accordance with such information as DNAI, S-NSSAI, application identifier or LCS client identifier.

Here, the DNAI, the S-NSSAI, the application identifier and the LCS client identifier are provided by the AF entity, or determined by the NEF entity in accordance with information provided by the GMLC and local configuration information. For example, the NEF entity determines the S-NSSAI in accordance with a service type and/or a client type provided by the GMLC.

Step 24: the NEF entity transmits an Nlmf_Location_DetermineLocation Request message to the LMF entity.

After this step, the LMF entity needs to obtain information of the RAN node for providing services for the UE and/or an ID of the UE. In a possible embodiment of the present disclosure, the information of the RAN node is an ID or an IP address of the RAN node.

In a possible embodiment of the present disclosure, the LMF entity obtains the information of the RAN node for providing services for the UE and/or the ID of the UE through the NRF entity, the AMF entity or the local network function entity.
1) When the LMF entity obtains the information of the RAN node for providing services for the UE and/or the ID of the UE through the NRF entity, the LMF entity transmits a request message a1 to the NRF entity, and receives a response message b1 from the NRF entity. The response message b1 includes the information of the RAN device for providing services for the UE and/or the ID of the UE, or includes failure indication information, and the failure indication information is used to indicate that the information of the RAN device for providing services for the UE and/or the ID of the UE fail to be stored in the NRF entity.

On one hand, in the case that the response message b1 includes the failure indication information, the information of the RAN device for providing services for the UE and/or the ID of the UE are obtained through the AMF entity.

It should be appreciated that, the obtaining the information of the RAN device for providing services for the UE and/or the ID of the UE through the AMF entity will be described in 2) and thus will not be particularly defined herein.

On the other hand, in the case that the response message b1 includes the failure indication information, the NRF entity is triggered to transmit a request message c1 to the AMF entity, and the information of the RAN device for providing services for the UE and/or the ID of the UE are received from the NRF entity after the NRF entity obtains a response message d1 from the AMF entity. The response message d1 includes the information of the RAN device for providing services for the UE and/or the ID of the UE.

Here, after the AMF entity has received the request message c1, the UE is triggered to be in a connected state, and the response message d1 is transmitted to the NRF entity. The response message d1 includes the information of the RAN device for providing services for the UE and/or the ID of the UE.

2) When the LMF entity obtains the information of the RAN device for providing services for the UE and/or the ID of the UE through the AMF entity, the LMF entity obtains information of the AMF entity from the UDM entity, transmits a request message a2 to the AMF entity, and receives a response message b2 from the AMF entity. The response message b2 includes the information of the RAN device for providing services for the UE and/or the ID of the UE.

It should be appreciated that, upon the receipt of the request message a2, when the AMF entity finds that the UE is in the connected state, it directly returns the response message b2, and the response message b2 includes the information of the RAN device for providing services for the UE and/or the ID of the UE.

When the AMF entity finds that the UE is in an idle state, the UE is triggered to be in the connected state, and then the AMF entity returns the response message b2. The response message B2 includes the information of the RAN device for providing services for the UE and/or the ID of the UE.

Step 25: the LMF entity triggers the UE positioning procedure. Specific steps thereof may refer to those in two rectangles in Fig. 4 according to the first embodiment of the present disclosure.

Step 26: the LMF entity transmits an Nlmf_Location_DetermineLocation Response message to the NEF entity, and this message includes the position information of the UE.

Step 27: the NEF entity performs privacy inspection. Here, Step 27 is optional, and the privacy inspection is performed again in accordance with a result of Step 22.

Step 28: the NEF entity transmits an Nnef_EventExposure_Notify message to the AF entity.

It should be appreciated that, in the second embodiment of the present disclosure, the AF entity searches for the NEF entity, and the positioning procedure is triggered through the NEF entity. When the NEF entity is deployed close to the RAN device, the positioning procedure is directly triggered through the NEF entity, so as to further prevent a core network side device from participating in the obtaining of the position of the UE, thereby to further reduce the delay of obtaining the position of the UE.

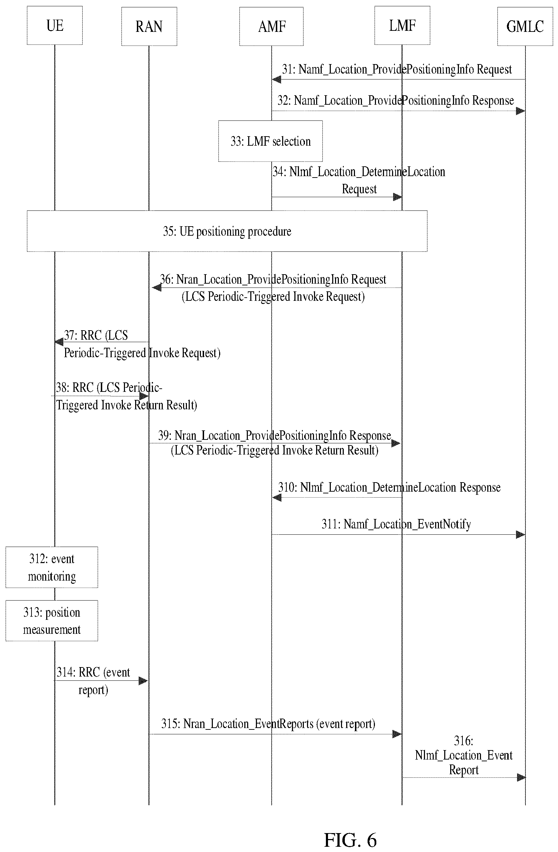

Third Embodiment: a deferred positioning procedure as shown in Fig. 6.

Step 31: the GMLC transmits an Namf_Location_ProvidePositioningInfo Request message to the AMF entity.

Step 32: the AMF entity transmits aNamf_Location_ProvidePositioningInfo Response message to the GMLC.

Step 33: the AMF entity selects the LMF entity.

The AMF entity obtains the information of the LMF entity through inquiring the NRF entity in accordance with such information as the DNAI, the S-NSSAI, the application identifier and the LCS client identifier.

Step 34: the AMF entity transmits an Nlmf_Location_DetermineLocation Request message to the LMF entity. This message includes the information of the RAN node for providing services for the UE and/or the ID of the UE. In a possible embodiment of the present disclosure, the information of the RAN node is the ID or IP address of the RAN node.

Step 35: the LMF entity triggers the UE positioning procedure. Specific steps thereof may refer to two rectangles in Fig. 4 according to the first embodiment of the present disclosure.

It should be appreciated that, when the position request is triggered periodically, the following Step 36 is performed: the LMF entity transmits an Nran_Location_ProvidePositioningInfo Request message to the RAN device. It should be appreciated that, this message includes an LCS Periodic-Triggered Invoke Request message, and the LCS Periodic-Triggered Invoke Request message includes the deferred router identifier.

Step 37: the RAN device transmits an RRC Message to the UE, and this message includes an LCS Periodic-Triggered Invoke Request.

Step 38: the UE transmits an RRC message to the RAN device, and this message includes an LCS Periodic-Triggered Invoke Return Result.

Step 39: the RAN device transmits an Nran_Location_ProvidePositioningInfo Response message to the LMF entity. Here, this message includes the LCS Periodic-Triggered Invoke Return Result.

Step 310: the LMF entity transmits an Nlmf_Location_DetermineLocation Response message to the AMF entity.

Step 311: the AMF entity transmits an Namf_Location_EventNotify message to the GMLC.

Step 312: the UE monitors an event or needs to report its position.

Step 313: the UE performs position measurement.

Step 314: the UE transmits an RRC message to the RAN device. This message includes an event report and the deferred router identifier.

Step 315: the RAN device transmits an Nran_Location_EventReport message to the LMF entity, and this message includes the event report. Here, the RAN device selects the LMF entity in accordance with the deferred router identifier.

Step 316: the LMF entity transmits Nlmf_Location_EventReport to the GMLC.

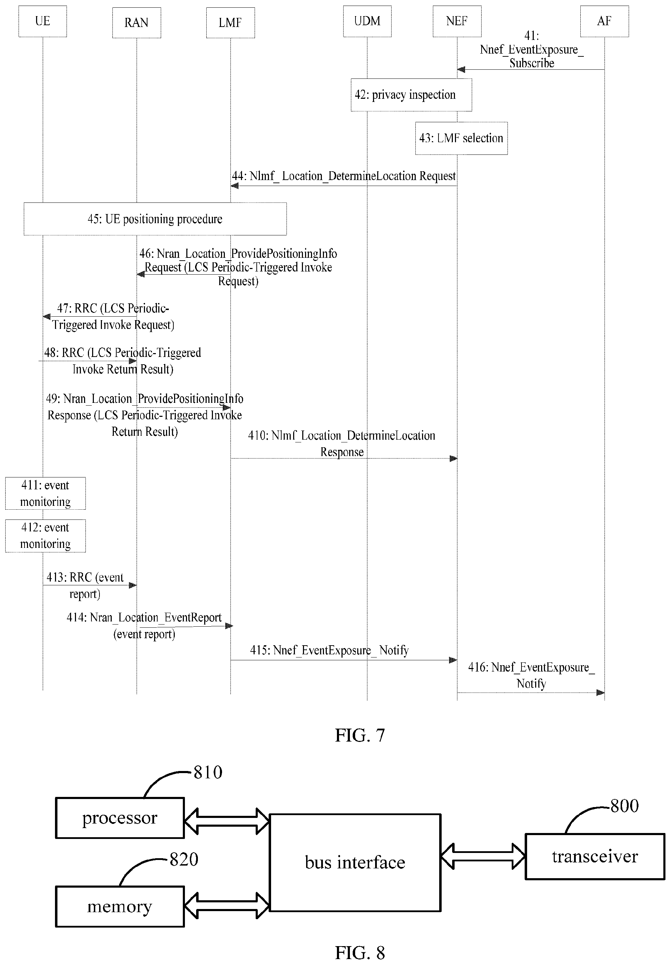

Fourth Embodiment: a deferred positioning procedure as shown in Fig. 7.

Step 41: the AF entity transmits an Nnef_EventExposure_Subscribe message to the NEF entity.

Step 42: the NEF entity obtains privacy information of the UE from the UDM entity, and performs privacy inspection.

Step 43: the NEF entity selects the LMF entity. This step may refer to Step 23 in the second embodiment.

Step 44: the NEF entity transmits an Nlmf_ Location_DetermineLocation Request message to the LMF entity.

After this step, the LMF entity needs to obtain the information of the RAN node for providing services for the UE and/or the ID of the UE. In a possible embodiment of the present disclosure, the information of the RAN node is the ID or IP address of the RAN node.

In a possible embodiment of the present disclosure, the LMF entity obtains the information of the RAN node for providing services for the UE and/or the ID of the UE through the NRF entity, the AMF entity or the local network function entity. A specific implementation thereof may refer to that in the second embodiment, and thus will not be particularly defined herein.

Step 45: the LMF entity triggers the UE positioning procedure. Specific steps thereof may refer to two rectangles in Fig. 4 according to the first embodiment of the present disclosure.

It should be appreciated that, when the position request is triggered periodically, the following Step 46 is performed: the LMF entity transmits an Nran_Location_ProvidePositioningInfo Request message to the RAN device. It should be appreciated that, this message includes an LCS Periodic-Triggered Invoke Request message, and the LCS Periodic-Triggered Invoke Request message includes the deferred router identifier.

Step 47: the RAN device transmits an RRC message to the UE, and this message includes the LCS Periodic-Triggered Invoke Request message.

Step 48: the UE transmits an RRC message to the RAN device, and this message includes an LCS Periodic-Triggered Invoke Return Result.

Step 49: the RAN device transmits an Nran_Location_ProvidePositioningInfo Response message to the LMF entity. Here, this message includes the LCS Periodic-Triggered Invoke Return Result.

Step 410: the LMF entity transmits an Nlmf_Location_DetermineLocation Response message to the NEF entity.

Step 411: the UE monitors an event or needs to report its position.

Step 412: the UE performs position measurement.

Step 413: the UE transmits an RRC message to the RAN device. This message includes an event report and the deferred router identifier.

Step 414: the RAN device transmits an Nran_Location_EventReport message to the LMF entity. This message includes the event report. Here, the RAN device selects the LMF entity in accordance with the deferred router identifier.

Step 415: the LMF entity transmits an Nnef_EventExposure_ Notify message to the NEF entity.

Step 416: the NEF entity transmits an Nnef EventExposure_ Notify message to the AF entity.

It should be appreciated that, as compared with the third embodiment, in the fourth embodiment, the core network device merely participates in the privacy inspection, so it is able to further prevent the core network device from participating in the processing of the positioning signaling, thereby to further reduce the delay for obtaining the position of the UE.

As shown in Fig. 8, the present disclosure further provides in some embodiments a positioning function entity. An interface for direct communication is between the positioning function entity and an RAN device. The positioning function entity includes a memory 820, a transceiver 800 and a processor 810. The memory 820 is configured to store therein a program instruction. The transceiver 800 is configured to receive and transmit data under the control of the processor 810. The processor 810 is configured to read the program instruction in the memory 820, so that the transceiver 800 is configured to: transmit a first request message to the RAN device through the interface for direct communication, the first request message being used to request position-related information; and receive a first response message in response to the first request message from the RAN device.

In Fig. 8, bus architecture may include a number of buses and bridges connected to each other, so as to connect various circuits for one or more processors 810 and one or more memories 820. In addition, as is known in the art, the bus architecture may be used to connect any other circuits, such as a circuit for a peripheral device, a circuit for a voltage stabilizer and a power management circuit. A bus interface may be provided, and the transceiver 800 may consist of a plurality of elements, i.e., a transmitter and a receiver for communication with any other devices over a transmission medium. The transmission medium includes a wireless channel, a wired channel, or an optical cable. The processor 810 may take charge of managing the bus architecture as well as general processing. The memory 820 may store therein data for the operation of the processor 810.

The processor 810 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the transceiver 800 is configured to: receive a position request message from a mobility function entity, the position request message being used to request a position of a UE and carrying UE-related information; and transmit the first request message to the RAN device corresponding to the UE-related information through the interface for direct communication in accordance with the UE-related information, the first request message carrying a first identity of the UE.

In a possible embodiment of the present disclosure, the transceiver 810 is configured to: obtain information of the RAN device for providing services for a UE and/or a first identity of the UE; and transmit the first request message to the RAN device corresponding to the information of the RAN device through the interface for direct communication in accordance with the information of the RAN device, the first request message carrying the first identity of the UE.

In a possible embodiment of the present disclosure, the processor 810 is further configured to: obtain UE-related information from a first function entity; and obtain the information of the RAN device for providing services for the UE and/or the first identity of the UE in accordance with the UE-related information.

In a possible embodiment of the present disclosure, the processor 810 is further configured to: receive a position request message from an exposure function entity, the position request message being used to request a position of a UE; and obtain the UE-related information corresponding to a second identity of the UE carried in the position request message from the first function entity in accordance with the second identity of the UE, the second identity being used to identify the UE, the UE being identified by a core network device in accordance with the second identity.

In a possible embodiment of the present disclosure, the UE-related information includes one or more of: information of the RAN device for providing services for the UE; the first identity of the UE; a connection state of the UE; information of a serving cell corresponding to the UE; or an access technology adopted by the UE.

In a possible embodiment of the present disclosure, the processor 810 is further configured to: assign an association identifier for the first request message, the association identifier being used to identify the first response message associated with the first request message in response messages from the RAN device; and transmit the first request message to the RAN device through the interface for direct communication, the first request message carrying the association identifier.

In a possible embodiment of the present disclosure, the transceiver 800 is configured to transmit the position information of the UE to the mobility function entity or the exposure function entity, and the position information of the UE is obtained by the positioning function entity in accordance with the first response message.

According to the positioning function entity in the embodiments of the present disclosure, the interface for direct communication is between the positioning function entity and the RAN device, the positioning function entity transmits the first request message to the RAN device through the interface for direct communication, the first request message is used to request the position-related information, and the positioning function entity receives the first response message in response to the first request message from the RAN device. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

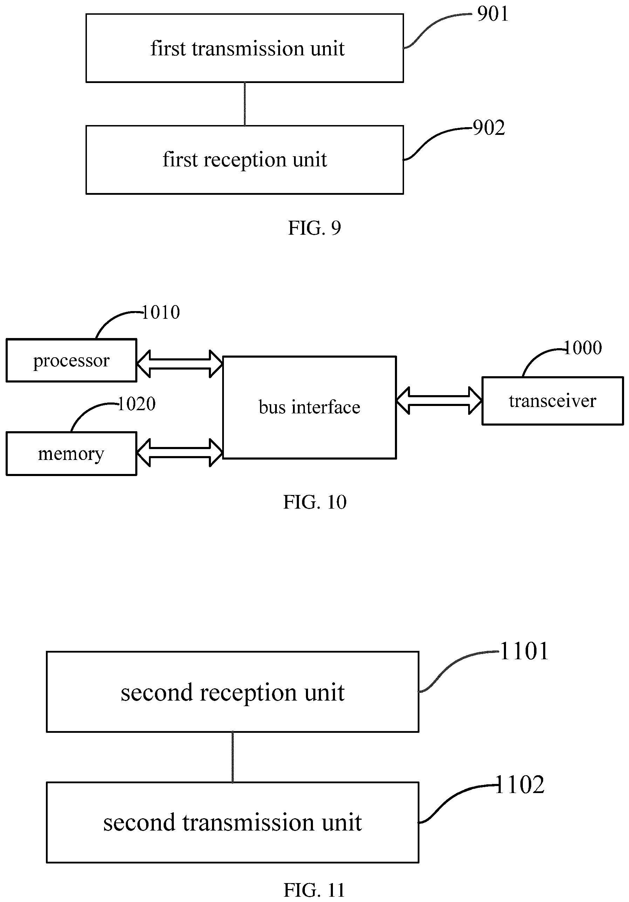

As shown in Fig. 9, the present disclosure further provides in some embodiments an information transmission apparatus, which includes: a first transmission unit 901 configured to transmit a first request message to an RAN device through an interface for direct communication between a positioning function entity and the RAN device, the first request message being used to request position-related information; and a first reception unit 902 configured to receive a first response message in response to the first request message from the RAN device.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the first transmission unit 901 is specifically configured to: receive a position request message from a mobility function entity, the position request message being used to request a position of a UE and carrying UE-related information; and transmit the first request message to the RAN device corresponding to the UE-related information through the interface for direct communication in accordance with the UE-related information, the first request message carrying a first identity of the UE.

In a possible embodiment of the present disclosure, the first transmission unit 901 is specifically configured to: obtain obtaining information of the RAN device for providing services for a UE and/or a first identity of the UE; and transmit the first request message to the RAN device corresponding to the information of the RAN device through the interface for direct communication in accordance with the information of the RAN device, the first request message carrying the first identity of the UE.

In a possible embodiment of the present disclosure, the first transmission unit 901 is specifically configured to: obtain UE-related information from a first function entity; and obtain the information of the RAN device for providing services for the UE and/or the first identity of the UE in accordance with the UE-related information.

In a possible embodiment of the present disclosure, the first transmission unit 901 is specifically configured to: receive a position request message from an exposure function entity, the position request message being used to request a position of a UE; and obtain the UE-related information corresponding to a second identity of the UE carried in the position request message from the first function entity in accordance with the second identity of the UE, the second identity being used to identify the UE, the UE being identified by a core network device in accordance with the second identity.

In a possible embodiment of the present disclosure, the UE-related information includes one or more of: information of the RAN device for providing services for the UE; the first identity of the UE; a connection state of the UE; information of a serving cell corresponding to the UE; or an access technology adopted by the UE.

In a possible embodiment of the present disclosure, the first transmission unit 901 is specifically configured to: assign an association identifier for the first request message, the association identifier being used to identify the first response message associated with the first request message in response messages from the RAN device; and transmit the first request message to the RAN device through the interface for direct communication, the first request message carrying the association identifier.

In a possible embodiment of the present disclosure, the information transmission apparatus further includes a third transmission unit configured to transmit position information of a UE to a mobility function entity or an exposure function entity, and the position information of the UE is obtained by the positioning function entity in accordance with the first response message.

According to the information transmission apparatus in the embodiments of the present disclosure, the interface for direct communication is between the positioning function entity and the RAN device, the positioning function entity transmits the first request message to the RAN device through the interface for direct communication, the first request message is used to request the position-related information, and the positioning function entity receives the first response message in response to the first request message from the RAN device. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the information transmission apparatus in the embodiments of the present disclosure is used to implement the above-mentioned method with a same technical effect, which will not be particularly defined herein.

The present disclosure further provides in some embodiments a processor-readable storage medium storing therein a program instruction. The program instruction is executed by a processor so as to: transmit a first request message to an RAN device through an interface for direct communication, the first request message being used to request position-related information; and receive a first response message in response to the first request message from the RAN device.

The program instruction is executed by the processor so as to implement the above-mentioned method for the positioning function entity in Fig. 1, which will not be particularly defined herein.

As shown in Fig. 10, the present disclosure further provides in some embodiments an RAN device, and an interface for direct communication is between the RAN device and the positioning function entity. The RAN device includes a memory 1020, a transceiver 1000 and a processor 1010. The memory 1020 is configured to store therein a computer program. The transceiver 1000 is configured to receive and transmit data under the control of the processor 1010. The transceiver 1000 is configured to: receive a first request message from the positioning function entity through the interface for direct communication, the first request message being used to request position-related information; and transmit a first response message in response to the first request message to the positioning function entity.

In Fig. 10, bus architecture may include a number of buses and bridges connected to each other, so as to connect various circuits for one or more processors 1010 and one or more memories 1020. In addition, as is known in the art, the bus architecture may be used to connect any other circuits, such as a circuit for a peripheral device, a circuit for a voltage stabilizer and a power management circuit. A bus interface may be provided, and the transceiver 1000 may consist of a plurality of elements, i.e., a transmitter and a receiver for communication with any other devices over a transmission medium. The transmission medium includes a wireless channel, a wired channel, or an optical cable. The processor 1010 may take charge of managing the bus architecture as well as general processing. The memory 1020 may store therein data for the operation of the processor 1010.

The processor 1010 is a CPU, an ASIC, an FPGA or a CPLD. The processor may also use multi-core architecture.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the processor 1010 is further configured to obtain an association identifier from the first request message, and store a mapping relationship between the association identifier and an identity of the positioning function entity.

In a possible embodiment of the present disclosure, the transceiver 1000 is further configured to transmit the first response message in response to the first request message to the positioning function entity in accordance with the mapping relationship between the association identifier and the identity of the positioning function entity.

According to the RAN device in the embodiments of the present disclosure, the interface for direct communication is between the positioning function entity and the RAN device, the RAN device receives the first request message from the positioning function entity through the interface for direct communication, the first request message is used to request the position-related information, and the RAN device transmits the first response message in response to the first request message to the positioning function entity. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

As shown in Fig. 11, the present disclosure further provides in some embodiments an information transmission apparatus, which includes: a second reception unit 1101 configured to receive a first request message from a positioning function entity through an interface for direct communication between an RAN device and the positioning function entity; and a second transmission unit 1102 configured to transmit a first response message in response to the first request message to the positioning function entity.

In a possible embodiment of the present disclosure, the first request message includes one or more of: a positioning message; a message type of the positioning message; an association identifier for identifying the first response message associated with the first request message in response messages from the RAN device; or a first identity of a UE, the first identity being assigned by the RAN device for the UE and used to identify the UE.

In a possible embodiment of the present disclosure, the information transmission apparatus further includes a processing unit configured to obtain an association identifier from the first request message, and store a mapping relationship between the association identifier and an identity of the positioning function entity.

In a possible embodiment of the present disclosure, the second transmission unit 1102 is specifically configured to transmit the first response message in response to the first request message to the positioning function entity in accordance with the mapping relationship between the association identifier and the identity of the positioning function entity.

According to the information transmission method in the embodiments of the present disclosure, the interface for direct communication is between the positioning function entity and the RAN device, the RAN device receives the first request message from the positioning function entity through the interface for direct communication, the first request message is used to request the position-related information, and the RAN device transmits the first response message in response to the first request message to the positioning function entity. As a result, through configuring the interface for direct communication between the positioning function entity and the RAN device, the positioning function entity directly invokes a positioning service of the RAN device, so as to transfer a positioning message between the positioning function entity and the RAN device, thereby to reduce a positioning delay.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a USB flash disk, a mobile HD, an ROM, an RAM, a magnetic disk or an optical disk.

It should be appreciated that, the information transmission apparatus in the embodiments of the present disclosure is used to implement the above-mentioned method with a same technical effect, which will not be particularly defined herein.

The present disclosure further provides in some embodiments a processor-readable storage medium storing therein a program instruction. The program instruction is executed by a processor, so as to: receive a first request message from the positioning function entity through the interface for direct communication, the first request message being used to request position-related information; and transmit a first response message in response to the first request message to the positioning function entity.

The program instruction is executed by the processor so as to implement the above-mentioned method for the RAN device in Fig. 2, which will not be particularly defined herein.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5^{th}-Generation (5G) New Radio (NR) system. Each of these systems includes a terminal device and a network device. Each system further includes a core network part, e.g., an Evolved Packet System (EPS) or 5G system (SGS).

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, a person skilled in the art may further make improvements and modifications without departing from the spirit of the present disclosure. If these improvements and modifications fall within the scope of the appended claims and the equivalents thereof, the present disclosure also intends to include them.

It should be further appreciated that, the above modules are divided merely on the basis of their logic functions, and in actual use, they may be completely or partially integrated into a physical entity, or physically separated from each other. These modules may be implemented by calling software through a processing element, or implemented in the form of hardware. For example, the determination module may be processing elements arranged separately, or integrated into a chip of the above-mentioned device. In addition, the module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

## Claims

1. An information transmission method, performed by a positioning function entity with an interface for direct communication between the positioning function entity and a radio access network (RAN) device, the information transmission method comprising:
transmitting, by the positioning function entity, a first request message to the RAN device through the interface for direct communication; wherein the first request message is used to request position-related information; and
receiving, by the positioning function entity, a first response message in response to the first request message from the RAN device.

2. The information transmission method according to claim 1, wherein the first request message comprises one or more of:
a positioning message;
a message type of the positioning message;
an association identifier for identifying the first response message associated with the first request message in response messages from the RAN device; or,
a first identity of a user equipment (UE); wherein the first identity is assigned by the RAN device for the UE and used to identify the UE.

3. The information transmission method according to claim 1, wherein the transmitting, by the positioning function entity, the first request message to the RAN device through the interface for direct communication, comprises:
receiving a position request message from a mobility function entity; wherein the position request message is used to request a position of a user equipment (UE) and the position request message carries UE-related information; and
transmitting the first request message to the RAN device corresponding to the UE-related information through the interface for direct communication in accordance with the UE-related information; wherein the first request message carries a first identity of the UE.

4. The information transmission method according to claim 1, wherein the transmitting, by the positioning function entity, the first request message to the RAN device through the interface for direct communication, comprises:
obtaining information of the RAN device that services a UE and/or a first identity of the UE; and
in accordance with the information of the RAN device, transmitting, through the interface for direct communication, the first request message to the RAN device corresponding to the information of the RAN device; wherein the first request message carries the first identity of the UE.

5. The information transmission method according to claim 4, wherein the obtaining the information of the RAN device that services the UE and/or the first identity of the UE, comprises:
obtaining UE-related information from a first function entity; and
obtaining the information of the RAN device that services the UE and/or the first identity of the UE in accordance with the UE-related information.

6. The information transmission method according to claim 5, wherein the obtaining the UE-related information from the first function entity, comprises:
receiving a position request message from an exposure function entity; wherein the position request message is used to request a position of a UE; and
in accordance with a second identity of the UE carried in the position request message, obtaining UE-related information corresponding to the second identity from the first function entity; wherein the second identity is used to identify the UE, and the UE is identified by a core network device in accordance with the second identity.

7. The information transmission method according to claim 3, 5 or 6, wherein the UE-related information comprises one or more of:
information of the RAN device that services the UE;
the first identity of the UE;
a connection state of the UE;
information of a serving cell corresponding to the UE; or,
an access technology adopted by the UE.

8. The information transmission method according to claim 1, wherein the transmitting, by the positioning function entity, the first request message to the RAN device through the interface for direct communication, comprises:
assigning, by the positioning function entity, an association identifier for the first request message; wherein the association identifier is used to identify the first response message associated with the first request message in response messages from the RAN device; and
transmitting, by the positioning function entity, the first request message to the RAN device through the interface for direct communication; wherein the first request message carries the association identifier.

9. The information transmission method according to claim 1, wherein after receiving, by the positioning function entity, the first response message in response to the first request message from the RAN device, the information transmission method further comprises:
transmitting position information of a UE to a mobility function entity or an exposure function entity; wherein the position information of the UE is obtained by the positioning function entity in accordance with the first response message.

10. An information transmission method, performed by a radio access network (RAN) device with an interface for direct communication between the RAN device and a positioning function entity, the information transmission method comprising:
receiving, by the RAN device, a first request message from the positioning function entity through the interface for direct communication; wherein the first request message is used to request position-related information; and
transmitting, by the RAN device, a first response message in response to the first request message to the positioning function entity.

11. The information transmission method according to claim 10, wherein the first request message comprises one or more of:
a positioning message;
a message type of the positioning message;
an association identifier for identifying the first response message associated with the first request message in response messages from the RAN device; or,
a first identity of a user equipment (UE); wherein the first identity is assigned by the RAN device for the UE and used to identify the UE.

12. The information transmission method according to claim 10, further comprising:
obtaining, by the RAN device, an association identifier from the first request message, and storing a mapping relationship between the association identifier and an identity of the positioning function entity.

13. The information transmission method according to claim 12, wherein the transmitting, by the RAN device, the first response message in response to the first request message to the positioning function entity, comprises:
transmitting the first response message in response to the first request message to the positioning function entity in accordance with the mapping relationship between the association identifier and the identity of the positioning function entity.

14. A positioning function entity with an interface for direct communication between the positioning function entity and a radio access network (RAN) device, the positioning function entity comprising: a memory, a transceiver and a processor; wherein the memory is configured to store program instructions, the transceiver is configured to receive and transmit data under control of the processor, and the transceiver is configured to perform the following operations:
transmitting a first request message to the RAN device through the interface for direct communication; wherein the first request message is used to request position-related information; and
receiving a first response message in response to the first request message from the RAN device.

15. The positioning function entity according to claim 14, wherein the first request message comprises one or more of:
a positioning message;
a message type of the positioning message;
an association identifier for identifying the first response message associated with the first request message in response messages from the RAN device; or,
a first identity of a user equipment (UE); wherein the first identity is assigned by the RAN device for the UE and used to identify the UE.

16. The positioning function entity according to claim 14, wherein the transceiver is configured to perform the following operations:
receiving a position request message from a mobility function entity; wherein the position request message is used to request a position of a user equipment (UE) and the position request message carries UE-related information; and
transmitting the first request message to the RAN device corresponding to the UE-related information through the interface for direct communication in accordance with the UE-related information; wherein the first request message carries a first identity of the UE.

17. The positioning function entity according to claim 14, wherein the transceiver is configured to perform the following operations:
obtaining information of the RAN device that services a UE and/or a first identity of the UE; and
in accordance with the information of the RAN device, transmitting, through the interface for direct communication, the first request message to the RAN device corresponding to the information of the RAN device; wherein the first request message carries the first identity of the UE.

18. The positioning function entity according to claim 17, wherein the processor is further configured to:
obtain UE-related information from a first function entity; and
obtain the information of the RAN device that services the UE and/or the first identity of the UE in accordance with the UE-related information.

19. The positioning function entity according to claim 18, wherein the processor is further configured to:
receive a position request message from an exposure function entity; wherein the position request message is used to request a position of a UE; and
in accordance with a second identity of the UE carried in the position request message, obtain UE-related information corresponding to the second identity from the first function entity; wherein the second identity is used to identify the UE, and the UE is identified by a core network device in accordance with the second identity.

20. The positioning function entity according to claim 16, 18 or 19, wherein the UE-related information comprises one or more of:
information of the RAN device that services the UE;
the first identity of the UE;
a connection state of the UE;
information of a serving cell corresponding to the UE; or,
an access technology adopted by the UE.

21. The positioning function entity according to claim 14, wherein the processor is further configured to:
assign an association identifier for the first request message; wherein the association identifier is used to identify the first response message associated with the first request message in response messages from the RAN device; and
transmit the first request message to the RAN device through the interface for direct communication; wherein the first request message carries the association identifier.

22. An information transmission apparatus, comprising:
a first transmission unit configured to transmit a first request message to a radio access network (RAN) device through an interface for direct communication between a positioning function entity and the RAN device; wherein the first request message is used to request position-related information; and
a first reception unit configured to receive a first response message in response to the first request message from the RAN device.

23. The information transmission apparatus according to claim 22, wherein the first request message comprises one or more of:
a positioning message;
a message type of the positioning message;
an association identifier for identifying the first response message associated with the first request message in response messages from the RAN device; or,
a first identity of a user equipment (UE); wherein the first identity is assigned by the RAN device for the UE and used to identify the UE.

24. The information transmission apparatus according to claim 22, wherein the first transmission unit is specifically configured to:
receive a position request message from a mobility function entity; wherein the position request message is used to request a position of a user equipment (UE) and the position request message carries UE-related information; and
transmit the first request message to the RAN device corresponding to the UE-related information through the interface for direct communication in accordance with the UE-related information; wherein the first request message carries a first identity of the UE.

25. The information transmission apparatus according to claim 22, wherein the first transmission unit is specifically configured to:
obtain information of the RAN device that services a UE and/or a first identity of the UE; and
in accordance with the information of the RAN device, transmit, through the interface for direct communication, the first request message to the RAN device corresponding to the information of the RAN device; wherein the first request message carries the first identity of the UE.

26. The information transmission apparatus according to claim 25, wherein the first transmission unit is specifically configured to:
obtain UE-related information from a first function entity; and
obtain the information of the RAN device that services the UE and/or the first identity of the UE in accordance with the UE-related information.

27. The information transmission apparatus according to claim 26, wherein the first transmission unit is specifically configured to:
receive a position request message from an exposure function entity; wherein the position request message is used to request a position of a UE; and
in accordance with a second identity of the UE carried in the position request message, obtain UE-related information corresponding to the second identity from the first function entity; wherein the second identity is used to identify the UE, and the UE is identified by a core network device in accordance with the second identity.

28. The information transmission apparatus according to claim 24, 26 or 27, wherein the UE-related information comprises one or more of:
information of the RAN device that services the UE;
the first identity of the UE;
a connection state of the UE;
information of a serving cell corresponding to the UE; or,
an access technology adopted by the UE.

29. The information transmission apparatus according to claim 22, wherein the first transmission unit is specifically configured to:
assign an association identifier for the first request message; wherein the association identifier is used to identify the first response message associated with the first request message in response messages from the RAN device; and
transmit the first request message to the RAN device through the interface for direct communication; wherein the first request message carries the association identifier.

30. The information transmission apparatus according to claim 22, further comprising:
a third transmission unit configured to transmit position information of a UE to a mobility function entity or an exposure function entity; wherein the position information of the UE is obtained by the positioning function entity in accordance with the first response message.

31. A radio access network (RAN) device with an interface for direct communication between the RAN device and a positioning function entity, the RAN device comprising a memory, a transceiver and a processor; wherein the memory is configured to store a computer program, the transceiver is configured to receive and transmit data under control of the processor, and the transceiver is configured to perform the following operations:
receiving a first request message from the positioning function entity through the interface for direct communication; wherein the first request message is used to request position-related information; and
transmitting a first response message in response to the first request message to the positioning function entity.

32. The RAN device according to claim 31, wherein the first request message comprises one or more of:
a positioning message;
a message type of the positioning message;
an association identifier for identifying the first response message associated with the first request message in response messages from the RAN device; or,
a first identity of a user equipment (UE); wherein the first identity is assigned by the RAN device for the UE and used to identify the UE.

33. The RAN device according to claim 31, wherein the processor is further configured to:
obtain an association identifier from the first request message, and store a mapping relationship between the association identifier and an identity of the positioning function entity.

34. The RAN device according to claim 31, wherein the transceiver is further configured to:
transmit the first response message in response to the first request message to the positioning function entity in accordance with the mapping relationship between the association identifier and the identity of the positioning function entity.

35. An information transmission apparatus, comprising:
a second reception unit configured to receive a first request message from a positioning function entity through an interface for direct communication between a radio access network (RAN) device and the positioning function entity; and
a second transmission unit configured to transmit a first response message in response to the first request message to the positioning function entity.

36. The information transmission apparatus according to claim 35, wherein the first request message comprises one or more of:
a positioning message;
a message type of the positioning message;
an association identifier for identifying the first response message associated with the first request message in response messages from the RAN device; or,
a first identity of a user equipment (UE); wherein the first identity is assigned by the RAN device for the UE and used to identify the UE.

37. The information transmission apparatus according to claim 35, further comprising:
a processing unit configured to obtain an association identifier from the first request message, and store a mapping relationship between the association identifier and an identity of the positioning function entity.

38. The information transmission apparatus according to claim 35, wherein the second transmission unit is specifically configured to:
transmit the first response message in response to the first request message to the positioning function entity in accordance with the mapping relationship between the association identifier and the identity of the positioning function entity.

39. A processor-readable storage medium, comprising a computer program stored thereon; wherein the computer program is executed by a processor to implement the information transmission method according to any one of claims 1 to 9, or implement the information transmission method according to any one of claims 10 to 13.
